# EUROPEAN PATENT SPECIFICATION

(11) **EP 0 463 689 B1**
(45) Date of publication and mention of the grant of the patent: **15.10.1997**
(21) Application number: 91201547.6
(22) Date of filing: 18.06.1991
(51) Int. Cl.: C08G 67/02

(54) **Preparation of polymers of carbon monoxide with olefinically unsaturated compounds**
Herstellung von Polymeren aus Kohlenmonoxid mit olefinisch ungesättigten Verbindungen
Procédé pour la préparation de polymères de monoxide de carbone avec des composés insaturés

(30) Priority: 22.06.1990 NL 9001432
(43) Date of publication of application: 02.01.1992
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL)

(56) References cited:
- EP-A- 0 121 965
- EP-A- 0 251 373
- EP-A- 0 272 727
- FR-A- 2 213 947

## Description

The invention relates to a process for the preparation of polymers of carbon monoxide with one or more olefinically unsaturated compounds.

It is known that linear polymers of carbon monoxide with one or more olefinically unsaturated compounds of the general formula (CH₂=CR¹)-R², wherein R¹ and R² represent hydrogen atoms and/or hydrocarbyl groups (designated hereinafter as A monomers for short), in which polymers the units originating from carbon monoxide on the one hand and the units originating from the A monomers on the other hand occur in a substantially alternating arrangement can be prepared by contacting the monomers at an elevated temperature and pressure with a catalyst composition comprising a Group VIII metal and a phosphorus bidentate ligand of the general formula (R³R⁴P)₂R, wherein R³ and R⁴ represent identical or different optionally polar-substituted aromatic hydrocarbyl groups and R a bivalent organic bridging group which contains at least two carbon atoms in the bridge that links the two phosphorus atoms with each other.

The aforesaid polymers comprise carbonyl groups as functional groups. Therefore, they are also sometimes called polyketones. By chemical reaction these carbonyl groups can at least in part be converted into a great number of other functional groups. This chemical modification changes the properties of the polymers and they become eligible for applications for which the original polymers were unsuitable or less suitable. Examples of chemical reactions which can be applied to the polymers are the conversion into polyalcohols by catalytic hydrogenation, the conversion into polyamines or polythiols by catalytic hydrogenation in the presence of ammonia or hydrogen sulphide, respectively, and the conversion into polyphenols by condensation with phenols.

In earlier investigations it has been established by the present Applicant that the polymers can be modified chemically by incorporating in the monomer mixture from which they are prepared, in addition to the carbon monoxide and the one or more A monomers, a relatively small amount of one or more olefinically unsaturated compounds (designated hereinafter as B monomers for short) which compounds comprise a monovalent oxygen-containing group that occurs directly bonded to a (CH₂=CR¹)- group. Examples of such compounds are carboxylic acid vinyl esters such as vinyl acetate, unsaturated aliphatic carboxylic acids such as acrylic acid and alkyl esters thereof such as methyl acrylate, and vinyl alkyl ethers such as methyl vinyl ether. Depending on the nature of the B monomers used, polymers are obtained that comprise, in addition to the carbonyl groups originally present in the polymers, oxycarbonyl or oxyether groups as functional groups. In contrast with the chemical modification discussed hereinbefore, in which at least a portion of the carbonyl groups present in the polymers is converted into other functional groups, i.e. a chemical modification afterwards, the use of type B monomers as comonomers can be seen as a chemical modification in situ, i.e. concurrent with the polymerization. The oxycarbonyl and oxyether groups, may, just like the carbonyl groups, be converted by subsequent chemical modification, at least partly, into a great number of other functional groups. Disadvantages of the aforesaid preparation of polymers, however, are that only a relatively small amount of a B monomer can be incorporated in the polymers in this manner and/or that the reaction rates achieved are low. Attempts to prepare copolymers of carbon monoxide with a B monomer, instead of terpolymers of carbon monoxide with an A monomer and a B monomer, remained unsuccessful.

Upon continued research into this subject by the Applicant, it was recently found that, when polymerizing carbon monoxide with olefinically unsaturated compounds which comprise a (CH₂=CR¹)- group and a monovalent oxygen-containing group using the aforesaid Group VIII metal/phosphorus bidentate ligand catalyst compositions, the location of the oxygen-containing group in these monomers in relation to the (CH₂=CR¹)- group is of great importance. It was found that, if, when preparing terpolymers of carbon monoxide with an olefinically unsaturated compound containing a (CH₂=CR¹)- group and a monovalent oxygen-containing group and with an A monomer, a compound (hereinafter designated as a D monomer) is used in which a bivalent hydrocarbylene bridge is located between the (CH₂=CR¹)- group and the monovalent oxygen-containing group a higher reaction rate is achievable and/or polymers with a higher content of an oxygen-containing monomer content can be prepared than when a B monomer is used, in which the monovalent oxygen-containing group occurs directly bonded to the (CH₂=CR¹)- group. Although it was additionally found that the use of D monomers, in contrast with the use of B monomers, offers the possibility of preparing linear polymers with carbon monoxide in which polymers the units originating from carbon monoxide on the one hand and the units originating from the D monomers on the other hand occur in a substantially alternating arrangement, these polymers still have the disadvantage that they have a weight average molecular weight ($\overline{\text{M}}$_{w}) of less than 1,000.

Upon continued investigation of this subject by the Applicant it has now been found that starting from these monomers polymers with a weight average molecular weight ($\overline{\text{M}}$_{w}) of more than 5,000 can be prepared by replacing in the catalyst composition used in the polymerization the phosphorus bidentate ligand of the general formula (R³R⁴P)₂R by a phosphorus bidentate ligand of the general formula (R⁵R⁶P)₂R, wherein R⁵ and R⁶ represent identical or different optionally polar-substituted aliphatic hydrocarbyl groups. Linear polymers of carbon monoxide with one or more D monomers in which polymers the units originating from carbon monoxide on the one hand and the units originating from the D monomers on the other hand occur in a substantially alternating arrangement and which polymers have an average molecular weight ($\overline{\text{M}}$_{w}) of more than 5,000 are novel. If, in addition to carbon monoxide and one or more D monomers, one or more A monomers are incorporated in the monomer mixture from which the polymers are prepared, using catalyst compositions that comprise a Group VIII metal and a phosphorus bidentate ligand of the general formula (R⁵R⁶P)₂R, linear polymers are obtained, wherein the units originating from carbon monoxide on the one hand and the units originating from A and D monomers on the other hand occur in a substantially alternating arrangement and wherein the units originating from A and D monomers are randomly distributed in relation to each other.

The present patent application therefore relates to a process for the preparation of polymers of carbon monoxide with one or more olefinically unsaturated compounds, characterized in that polymers of carbon monoxide with one or more monomers comprising a group of the general formula (CH₂=CR¹)- which is linked by a bivalent hydrocarbylene bridge to a monovalent oxygen-containing group (monomers D) and optionally additionally with one or more monomers of the general formula (CH₂=CR¹)-R² (A monomers) are prepared by contacting the monomers at elevated temperature and pressure with a catalyst composition comprising a Group VIII metal and a phosphorus bidentate ligand of the general formula (R⁵R⁶P)₂R, in which general formulae R¹ and R² represent hydrogen atoms and/or hydrocarbyl groups, R is a bivalent organic bridging group which contains at least two carbon atoms in the bridge linking the two phosphorus atoms to each other and R⁵ and R⁶ represent identical or different optionally polar-substituted aliphatic hydrocarbyl groups.

The patent application also relates to novel linear polymers of carbon monoxide with one or more D monomers in which polymers the units originating from carbon monoxide on the one hand and the units originating from D monomers on the other hand occur in an alternating arrangement and which polymers have a weight average molecular weight ($\overline{\text{M}}$_{w}) of more than 5,000.

The D monomers which are used in the preparation of polymers according to the invention preferably contain as a bivalent hydrocarbon bridging group a -(CH₂)ₙ- group in which n is preferably less than 15 and in particular less than 10. As examples of suitable monovalent oxygen-containing groups that may occur in D monomers, the following groups can be mentioned: -OR², -COR², -COOR², and -OCOR². Favourable results were obtained by using D monomers in which an -OH or a -COOH group occurred as a monovalent oxygen-containing group.

In the preparation of polymers according to the invention, preference is given to starting from a monomer mixture that contains only one D monomer in addition to carbon monoxide. If in the preparation of polymers use is also made of A monomers, preference is given to starting from a monomer mixture that in addition to a carbon monoxide and one D monomer contains only one A monomer. The A monomers used preferably comprise less than 10 carbon atoms. Examples of suitable A monomers are ethene, propene, butene-1, pentene-1, hexene-1, octene-1, and styrene. Ethene is preferably used as a A monomer.

As examples of D monomers in which the oxygen-containing group is an -OR² group can be mentioned 3-butenol-1, 10-undecenyl alcohol and methyl(10-undecenyl) ether.

Examples of D monomers in which the oxygen-containing group is a -COR² group are 4-pentenal and methyl(4-butenyl) ketone.

As examples of D monomers in which the oxygen-containing group is a -COOR² group can be mentioned 10-undecenoic acid and its methyl ester.

Examples of D monomers in which the oxygen-containing group is a -OCOR² group are allyl acetate and (10-undecenyl) acetate.

As novel polymers according to the invention, copolymers of carbon monoxide are prepared with one D monomer chosen from the group consisting of 3-butenol-1 and 10-undecenoic acid.

As stated above, the polymers prepared according to the invention contain, depending on the used D monomers, functional groups which, by means of chemical modification, can at least partly be converted into other functional groups.

If, when preparing polymers a compound is used as D monomer in which an -OR²- group occurs as the oxygen-containing group, polymers are obtained that contain alcohol groups or ether groups as functional groups. By heating the polymers containing ether groups, alcohol is split off with the formation of >C=C< groups in the side-chains of the polymers.

When using a D monomer in which a -COR² group occurs as the oxygen-containing group, polymers are obtained that contain aldehyde groups or ketone groups as functional groups. By means of reduction, the aldehyde and ketone groups can be converted into alcohol groups and by oxydation the aldehyde groups can be converted into carboxylic acid groups.

If, when preparing polymers a D monomer is used in which a -COOR² group occurs as the oxygen-containing group, polymers are obtained that contain carboxylic acid or carboxylic ester groups as functional groups. By saponifying the polymers that contain carboxylic ester groups these groups are converted into carboxylic acid groups.

When using a D monomer in which an -OCOR² group occurs as the oxygen-containing group, polymers are obtained that contain carboxylic ester groups as functional groups. By saponifying the polymers, these groups are converted into alcohol groups.

In the preparation of polymers according to the invention a catalyst composition comprising a Group VIII metal and a phosphorus bidentate ligand of the general formula (R⁵R⁶P)₂R is used. In the present patent application, Group VIII metals are understood to be the noble metals ruthenium, rhodium, palladium, osmium, iridium and platinum, as well as the iron group metals iron, cobalt and nickel. In the catalyst compositions used in the process of the invention, the Group VIII metal is preferably chosen from palladium, nickel and cobalt. Particular preference is given to palladium as the Group VIII metal. The Group VIII metal is preferably incorporated in the catalyst compositions in the form of a salt of a carboxylic acid, in particular in the form of an acetate. In addition to a Group VIII metal and a phosphorus bidentate ligand the catalyst compositions used in the process of the invention preferably comprise an anion of an acid with a pKa of less than 6 and in particular an anion of an acid with a pKa of less than 2. Examples of acids with a pKa of less than 2 are mineral acids such as sulphuric acid and perchloric acid, sulphonic acids methanesulphonic acid, trifluoromethanesulphonic acid, and para-toluenesulphonic acid, as well as halogen carboxylic acids such as trichloroacetic acid, difluoroacetic acid, and trifluoroacetic acid. Preference is given to a sulphonic acid such as para-toluenesulphonic acid or a halogen carboxylic acid such as trifluoroacetic acid. The anion can be incorporated in the catalyst compositions either in the form of a compound from which the desired anion splits off or in the form of a mixture of compounds from which the desired anion is formed by interreaction. As a rule the anion is incorporated in the catalyst compositions in the form of an acid. If required, the anion can also be incorporated in the catalyst compositions in the form of a salt of a main group metal or a salt of a base transition metal of the acid involved. If an anion of carboxylic acid is chosen, its incorporation in the catalyst compositions can take place in the form of an acid or one of its derivates such as an alkyl or aryl ester, amide, imide, anhydride, ortho-ester, lactone or alkylidene dicarboxylate. In the catalyst compositions the anion is preferably present in a quantity of 1-100 and in particular of 2-50 mol per g.atom of Group VIII metal. As well as using it as a separate component the anion of an acid with a pKa of less than 6 can also be present in the catalyst compositions because, for example, palladium trifluoroacetate or palladium para-tosylate was used as Group VIII metal compound.

In addition to a Group VIII metal, a phosphorus bidentate ligand and optionally an anion of an acid with a pKa of less than 6, the catalyst compositions used in the process according to the invention preferably comprise an organic oxidizing agent. Examples of suitable organic oxidizing agents are 1,2-quinone and 1,4-quinone, aliphatic nitrites such as butyl nitrite, and aromatic nitro-compounds such as nitrobenzene and 2,4-dinitrotoluene. Preference is given to 1,4-benzoquinone and 1,4-naphthoquinone. The quantity of organic oxidizing agent used preferably amounts to 5-5,000 and in particular 10-1,000 mol per g.atom of Group VIII metal.

In the catalyst compositions used in the process of the invention, the phosphorus bidentate ligand is preferably present in a quantity of 0.5-2 and in particular of 0.75-1.5 mol per g.atom of Group VIII metal. In the phosphorus bidentate ligand of the general formula (R⁵R⁶P)₂R the R⁵ and R⁶ groups do not contain more than 10 and in particular not more than 6 carbon atoms each. Preference is further given to phosphorus bidentate ligands wherein the R⁵ and R⁶ groups are identical alkyl groups. As regards the bridging group R present in the phosphorus bidentate ligands, preference is given to bridging groups that comprise 3 atoms in the bridge of which at least 2 are carbon atoms. Examples of suitable bridging groups R are the -CH₂-CH₂-CH₂- group, the -CH₂-C(CH₃)₂-CH₂- group, -CH₂-Si(CH₃)₂-CH₂- group, and the -CH₂-O-CH₂- group. A very suitable phosphorus bidentate ligand for use with the present catalyst compositions is 1,3-bis(di-n-butylphosphino)propane.

The quantity of catalyst composition employed in the process of the invention may vary within wide limits. Per mol of olefinically unsaturated compound to be polymerized, the quantity of catalyst composition preferably employed contains 10⁻⁷-10⁻³ and in particular 10⁻⁶-10⁻⁴ mol of Group VIII metal.

In the process according to the invention, the monomers are preferably contacted with a solution of the catalyst composition in a diluent. Lower alcohols such as methanol or mixtures of lower alcohols with cyclic ethers such as a mixtures of methanol and tetrahydrofuran are very suitable as diluents. Polymerization is preferably carried out at a temperature of 25-150°C and a pressure of 2-150 bar and in particular at a temperature of 30-130°C and a pressure of 5-100 bar. The molar ratio of olefinically unsaturated compounds relative to carbon monoxide is preferably 10:1-1:10 and in particular 5:1-1:5.

The invention will now be illustrated with the aid of the following examples:

### Example 1 (comparative example)

Into a stirred autoclave with a capacity of 250 l, a catalyst solution was introduced containing:
30 ml methanol,
0.1 mmol palladium acetate,
0.5 mmol copper para-tosylate and
0.15 mmol 1,3-bis(diphenylphosphino)propane.

After 30 ml methyl acrylate had been introduced into the autoclave, air was evacuated and carbon monoxide was forced in until a pressure of 40 bar was reached. Subsequently the contents of the autoclave was brought to 90°C. After 5 hours the autoclave was cooled to room temperature and the pressure was released. Only traces of polymer material were obtained.

### Example 2 (comparative example)

A carbon monoxide/methyl 10-undecenoate copolymer was prepared by substantially repeating Example 1, but with the following differences:
a) A catalyst solution was used containing:
   30 ml methanol,
   0.5 mmol palladium acetate,
   0.5 mmol copper para-tosylate and
   0.75 mmol 1,3-bis(diphenylphosphino)propane.
b) 30 ml methyl 10-undecenoate were introduced into the autoclave instead of methyl acrylate, and
c) the reaction temperature was 50 °C instead of 90 °C.

Yield was 11 g copolymer with a $\overline{\text{M}}$_{w} of approx. 800.

### Example 3 (comparative example)

A carbon monoxide/10-undecenyl alcohol copolymer was prepared in substantially the same manner as in Example 1, but with the following differences:
a) A catalyst solution was used containing:
   50 ml methanol,
   0.5 mmol palladium acetate,
   2 mmol copper para-tosylate and
   0.75 mmol 1,3-bis(diphenylphosphino)propane.
b) 20 ml 10-undecenyl alcohol were introduced into the autoclave instead of methyl acrylate, and
c) the reaction temperature was 70 °C instead of 90 °C.

Yield was 8 g copolymer with a $\overline{\text{M}}$_{w} of approx. 500.

### Example 4

A carbon monoxide/10-undecenoic acid copolymer was prepared in substantially the same manner as in Example 1, but with the following differences:
a) A catalyst solution was used containing:
   5 ml methanol,
   100 ml tetrahydrofuran
   0.1 mmol palladium acetate,
   0.5 mmol nickel perchlorate,
   0.12 mmol 1,3-bis(di-n-butylphosphino)propane, and
   6 mmol naphthoquinone.
b) 40 ml 10-undecenoic acid were introduced into the autoclave instead of methyl acrylate,
c) reaction temperature was 50 °C instead of 90 °C, and
d) reaction time was was 10 hours instead of 5 hours.

Yield was 35 g copolymer with a $\overline{\text{M}}$_{w} of approx. 16,000.

### Example 5

A carbon monoxide/3-butenol-1 copolymer was prepared in substantially the same manner as the carbon monoxide/10-undecenoic acid copolymer in Example 4, but with the difference that 30 ml 3-butenol-1 were introduced into the autoclave instead of 10-undecenoic acid.

Yield was 20 g copolymer with a $\overline{\text{M}}$_{w} of approx. 10,000.

Of examples 1-5, examples 4 and 5 are in accordance with the invention. In these examples, starting from a mixture of carbon monoxide and a D monomer and employing a catalyst composition which comprised a tetra-alkyl bisphosphine as phosphorus bidentate ligand novel copolymers were prepared according to the invention with a $\overline{\text{M}}$_{w} greater of than 5,000. Examples 1-3 fall outside the scope of the invention and have been included in the patent application for comparison. Example 1 shows that starting from a mixture of carbon monoxide and a B monomer, and employing a catalyst composition which comprised a tetraaryl bisphosphine, no CO/B copolymers could be prepared. Examples 2 and 3 show that, although starting from a mixture of carbon monoxide and a D monomer and employing a catalyst composition which comprised a tetra-aryl bisphosphine CO/D copolymers could be prepared, these have a $\overline{\text{M}}$_{w} of less than 1,000. With the aid of ¹³NMR analysis, it was established that the CO/D copolymers prepared according to examples 2-5 were made up of linear chains in which the units originating from carbon monoxide on the one hand and the units originating from D monomers on the other hand occurred in an alternating arrangement. GPC analysis was used to determine the $\overline{\text{M}}$_{w} of the polymers.

## Claims

1. Process for the preparation of polymers of carbon monoxide with one or more olefinically unsaturated compounds, characterized in that polymers of carbon monoxide with one or more monomers comprising a group of the general formula (CH₂=CR¹)- which is linked by a bivalent hydrocarbylene bridge to a monovalent oxygen-containing group (monomers D) and optionally additionally with one or more monomers of the general formula (CH₂=CR¹)-R² (A monomers) are prepared by contacting the monomers at elevated temperature and pressure with a catalyst composition comprising a Group VIII metal and a phosphorus bidentate ligand of the general formula (R⁵R⁶P)₂R, in which general formulae R¹ and R² represent hydrogen atoms and/or hydrocarbyl groups, R is a bivalent organic bridging group which contains at least two carbon atoms in the bridge linking the two phosphorus atoms to each other and R⁵ and R⁶ represent identical or different optionally polar-substituted aliphatic hydrocarbyl groups.

2. Process as claimed in claim 1, characterized in that a -(CH₂)ₙ- group in which n is less than 15 occurs as bivalent organic bridging group in the D monomers.

3. Process as claimed in claim 1 or 2, characterized in that the monovalent oxygen-containing group that occurs in the D monomers is chosen from -OR², -COR², -COOR², and -OCOR².

4. Process as claimed in claim 3, characterized in that the monovalent oxygen-containing group that occurs in the D monomers is chosen from -OH and -COOH.

5. Process as claimed in one or more of claims 1-4, characterized in that only one D monomer occurs in the monomer mixture from which the polymers are prepared, which monomer is chosen from the group consisting of 3-butenol-1 and 10-undecenoic acid.

6. Process as claimed in one or more of claims 1-5, characterized in that each of the optionally used A monomers contain less than 10 carbon atoms.

7. Process as claimed in one or more of claims 1-6, characterized in that the Group VIII metal is incorporated in the catalyst composition in the form of a salt of a carboxylic acid such as an acetate.

8. Process as claimed in one or more of claims 1-7, characterized in that the catalyst composition contains palladium as Group VIII metal.

9. Process as claimed in one or more of claims 1-8, characterized in that the phosphorus bidentate ligand is present in the catalyst composition in a quantity of 0.5-2 mol per g.atom of Group VIII metal.

10. Process as claimed in one or more of claims 1-9, characterized in that the R⁵ and R⁶ groups in the phosphorus bidentate ligand do not contain more than 10 carbon atoms each.

11. Process as claimed in one or more of claims 1-10, characterized in that the catalyst composition contains as phosphorus bidentate ligand 1,3-bis(di-n-butylphosphino)propane.

12. Process as claimed in one or more of claims 1-11, characterized in that the catalyst composition further contains an anion of an acid with a pKa of less than 6, in a quantity of 1-100 mol per g.atom of Group VIII metal.

13. Process as claimed in one or more of claims 1-12, characterized in that it is carried out at a temperature of 25-150 °C, a pressure of 2-150 bar and a molar ratio of olefinically unsaturated compounds to carbon monoxide of from 10:1 to 1:10 and in that per mol of olefinically unsaturated compound to be polymerized a quantity of catalyst composition is used which contains 10⁻⁷-10⁻³ g.atom of Group VIII metal.

14. Linear polymers of carbon monoxide with one or more olefinically unsaturated compounds, characterized in that the olefinically unsaturated compound(s) is a compound (are compounds) which comprise(s) a group of the general formula (CH₂=CR¹)- which is linked by a bivalent hydrocarbylene bridging group to a monovalent oxygen-containing group (D monomer(s)), in which polymers the units originating from carbon monoxide on the one hand and the units originating from the D monomers on the other hand occur in an alternating arrangement, which polymers have a weight average molecular weight ($\overline{\text{M}}$_{w}) of more than 5,000, and wherein R¹ in the general formula represents hydrogen or a hydrocarbyl group.

15. Linear polymers as claimed in claim 14, characterized in being copolymers of carbon monoxide with either 3-butenol-1 or 10-undecenoic acid.

## Patentansprüche

1. Verfahren zur Herstellung von Polymeren aus Kohlenmonoxid und einer oder mehreren olefinisch ungesättigten Verbindungen, dadurch gekennzeichnet, daß man Polymere aus Kohlenmonoxid und einem oder mehreren Monomeren, die eine Gruppe der allgemeinen Formel (CH₂=CR¹)- enthalten, die über eine zweiwertige Kohlenwasserstoffbrücke an eine einwertige sauerstoffhaltige Gruppe gebunden ist (Monomere D), und gegebenenfalls zusätzlich einem oder mehreren Monomeren der allgemeinen Formel (CH₂=CR¹)-R² (Monomere A) herstellt, indem man die Monomere bei erhöhter Temperatur und bei erhöhtem Druck mit einer Katalysatorzusammensetzung, enthaltend ein Metall der Gruppe VIII und einen zweizähnigen Phosphorliganden der allgemeinen Formel (R⁵R⁶P)₂R, wobei in den allgemeinen Formeln R¹ und R² Wasserstoffatome und/oder Kohlenwasserstoffgruppen, R eine zweiwertige organische Brückengruppe, die mindestens zwei Kohlenstoffatome in der die beiden Phosphoratome miteinander verbindenden Brücke enthält, und R⁵ und R⁶ gleiche oder verschiedene, gegebenenfalls polar substituierte aliphatische Kohlenwasserstoffgruppen bedeuten, in Berührung bringt.

2. Verfahren nach Anspruch 1, dadurch gekennzeichnet, daß man Monomere D einsetzt, in denen als zweiwertige organische Brückengruppe eine -(CH₂)ₙ-Gruppe auftritt, in der n weniger als 15 beträgt.

3. Verfahren nach Anspruch 1 oder 2, dadurch gekennzeichnet, daß man die in den Monomeren D auftretende einwertige sauerstoffhaltige Gruppe unter -OR², -COR², -COOR² und -OCOR² auswählt.

4. Verfahren nach Anspruch 3, dadurch gekennzeichnet, daß man die in den Monomeren D auftretende einwertige sauerstoffhaltige Gruppe unter -OH und -COOH auswählt.

5. Verfahren nach einem oder mehreren der Ansprüche 1-4, dadurch gekennzeichnet, daß man im Monomerengemisch, aus dem man die Polymere herstellt, nur ein Monomer D einsetzt, das man aus der Gruppe bestehend aus 3-Butenol-1 und 10-Undecensäure auswählt.

6. Verfahren nach einem oder mehreren der Ansprüche 1-5, dadurch gekennzeichnet, daß man gegebenenfalls eingesetzte Monomere A verwendet, die jeweils weniger als 10 Kohlenstoffatome enthalten.

7. Verfahren nach einem oder mehreren der Ansprüche 1-6, dadurch gekennzeichnet, daß man das Metall der Gruppe VIII in Form eines Carbonsäuresalzes wie eines Acetats in die Katalysatorzusammensetzung einarbeitet.

8. Verfahren nach einem oder mehreren der Ansprüche 1-7, dadurch gekennzeichnet, daß man eine Katalysatorzusammensetzung einsetzt, die als Metall der Gruppe VIII Palladium enthält.

9. Verfahren nach einem oder mehreren der Ansprüche 1-8, dadurch gekennzeichnet, daß man eine Katalysatorzusammensetzung einsetzt, die den zweizähnigen Phosphorliganden in einer Menge von 0,5-2 mol pro Grammatom des Metalls der Gruppe VIII enthält.

10. Verfahren nach einem oder mehreren der Ansprüche 1-9, dadurch gekennzeichnet, daß man einen zweizähnigen Phosphorliganden einsetzt, in dem die Gruppen R⁵ und R⁶ jeweils nicht mehr als 10 Kohlenstoffatome enthalten.

11. Verfahren nach einem oder mehreren der Ansprüche 1-10, dadurch gekennzeichnet, daß man eine Katalysatorzusammensetzung einsetzt, die als zweizähnigen Phosphorliganden 1,3-Bis(di-n-butylphosphino)propan enthält.

12. Verfahren nach einem oder mehreren der Ansprüche 1-11, dadurch gekennzeichnet, daß man eine Katalysatorzusammensetzung einsetzt, die weiterhin auch noch ein Anion einer Säure mit einem pKa-Wert kleiner 6 in einer Menge von 1-100 mol pro Grammatom des Metalls der Gruppe VIII enthält.

13. Verfahren nach einem oder mehreren der Ansprüche 1-12, dadurch gekennzeichnet, daß man es bei einer Temperatur von 25-150°C, einem Druck von 2-150 bar und einem Molverhältnis der olefinisch ungesättigten Verbindungen zum Kohlenmonoxid von 10:1 bis 1:10 durchführt und daß man pro Mol zu polymerisierender olefinisch ungesättigter Verbindung eine Menge an Katalysatorzusammensetzung, die 10⁻⁷-10⁻³ Grammatom des Metalls der Gruppe VIII enthält, einsetzt.

14. Lineare Polymere aus Kohlenmonoxid und einer oder mehreren olefinisch ungesättigten Verbindungen, dadurch gekennzeichnet, daß es sich bei der olefinisch ungesättigten Verbindung bzw. den olefinisch ungesättigten Verbindungen um eine Verbindung bzw. Verbindungen handelt, die eine Gruppe der allgemeinen Formel (CH₂=CR¹)- enthält bzw. enthalten, die über eine zweiwertige Kohlenwasserstoffbrücke an eine einwertige sauerstoffhaltige Gruppe gebunden ist (Monomer bzw. Monomere D) , wobei in diesen Polymeren die vom Kohlenmonoxid stammenden Einheiten einerseits und die von den Monomeren D stammenden Einheiten andererseits in alternierender Anordnung vorliegen, die Polymere ein gewichtsmittleres Molekulargewicht ($\overline{\text{M}}$_{w}) über 5.000 aufweisen und R¹ in der allgemeinen Formel Wasserstoff oder eine Kohlenwasserstoffgruppe bedeutet.

15. Lineare Polymere nach Anspruch 14, dadurch gekennzeichnet, daß es sich dabei um Copolymere aus Kohlenmonoxid und entweder 3-Butenol-1 oder 10-Undecensäure handelt.

## Revendications

1. Procédé de préparation de polymères du monoxyde de carbone avec un ou plusieurs composés à insaturation oléfinique, caractérisé en ce que l'on prépare des polymères du monoxyde de carbone avec un ou plusieurs monomères comprenant un radical de la formule générale (CH₂=CR¹)- qui est lié par un pont hydrocarbylène bivalent à un radical contenant de l'oxygène monovalent (monomères D) et éventuellement complémentairement avec un ou plusieurs monomères de la formule générale (CH₂=CR¹)-R² (monomères A), par la mise en contact des monomères à température et pression élevées avec une composition catalytique comprenant un métal du groupe VIII et un ligand bidentate du phosphore de la formule générale (R⁵R⁶P)₂R, formules générales dans lesquelles R¹ et R² représentent des atomes d'hydrogène et/ou des radicaux hydrocarbyle, R représente un groupe de pontage organique bivalent qui contient au moins deux atomes de carbone dans le pont liant les deux atomes de phosphore l'un à l'autre et R⁵ et R⁶ représentent des radicaux hydrocarbyle aliphatiques à substitution polaire éventuelle, identiques ou différents.

2. Procédé suivant la revendication 1, caractérisé en ce qu'un radical -(CH₂)ₙ- dans lequel n est inférieur à 15 se présente, à titre de radical de pontage organique bivalent dans les monomères D.

3. Procédé suivant la revendication 1 ou 2, caractérisé en ce que le radical contenant de l'oxygène monovalent qui est présent dans les monomères D est choisi parmi -OR², -COR², -COOR² et -OCOR².

4. Procédé suivant la revendication 3, caractérisé en ce que le radical contenant de l'oxygène monovalent qui est présent dans les monomères D est choisi parmi -OH et -COOH.

5. Procédé suivant une ou plusieurs des revendications 1 à 4, caractérisé en ce que seulement un monomère D est présent dans le mélange de monomères, à partir duquel on prépare les polymères, lequel monomère est choisi dans le groupe formé par le 3-buténol-1 et l' acide 10-undécénoïque.

6. Procédé suivant une ou plusieurs des revendications 1 à 5, caractérisé en ce que chacun des monomères A, éventuellement utilisés contient moins de 10 atomes de carbone.

7. Procédé suivant une ou plusieurs des revendications 1 à 6, caractérisé en ce que l'on incorpore le métal du groupe VIII à la composition catalytique, sous la forme d'un sel d'un acide carboxylique, tel qu'un acétate.

8. Procédé suivant une ou plusieurs des revendications 1 à 7, caractérisé en ce que la composition catalytique contient du palladium, à titre de métal du groupe VIII.

9. Procédé suivant une ou plusieurs des revendications 1 à 8, caractérisé en ce que le ligand bidentate du phosphore est présent dans la composition catalytique, en une proportion de 0,5 à 2 moles par atome-gramme de métal du groupe VIII.

10. Procédé suivant une ou plusieurs des revendications 1 à 9, caractérisé en ce que les radicaux R⁵ et R⁶ dans le ligand bidentate du phosphore ne contiennent chacun pas plus de 10 atomes de carbone.

11. Procédé suivant une ou plusieurs des revendications 1 à 10, caractérisé en ce que la composition catalytique contient, à titre de ligand bidentate du phosphore, le 1,3-bis(di-n-butylphosphino)propane.

12. Procédé suivant une ou plusieurs des revendications 1 à 11, caractérisé en ce que la composition catalytique contient en outre un anion d'un acide qui possède un pKa inférieur à 6, en une proportion de 1 à 100 moles par atome-gramme de métal du groupe VIII.

13. Procédé suivant une ou plusieurs des revendications 1 à 12, caractérisé en ce qu'on l'entreprend à une température de 25 à 150°C, une pression de 2 à 150 bars et un rapport molaire des composés à insaturation oléfinique au monoxyde de carbone de 10:1 à 1:10 et en ce que, par mole de composé à insaturation oléfinique à polymériser, on utilise une proportion de composition catalytique qui contient de 10⁻⁷-10⁻³ atome-gramme de métal du groupe VIII.

14. Polymères linéaires du monoxyde de carbone avec un ou plusieurs composés à insaturation oléfinique, caractérisés en ce que le ou les composés à insaturation oléfinique sont des composés qui comprennent un groupe de la formule générale (CH₂=CR¹)- qui est lié par un groupe de pontage du type hydrocarbylène bivalent à un groupe contenant de l'oxygène monovalent (monomère(s) D), polymères dans lesquels les unités qui tirent leur origine du monoxyde de carbone, d'une part et les unités qui tirent leur origine des monomères D, d'autre part, se présentent en un agencement alternant, lesquels polymères possèdent un poids moléculaire moyen en poids ($\overline{\text{M}}$ₚ) supérieur à 5.000 et dans lesquels R¹ dans la formule générale représente un atome d'hydrogène ou un radical hydrocarbyle.

15. Polymères linéaires suivant la revendication 14, caractérisés en ce que ce sont des copolymères du monoxyde de carbone avec le 3-buténol-1 ou l'acide 10-décénoïque.
